# EUROPEAN PATENT APPLICATION

(11) **EP 4 404 127 A1**
(43) Date of publication of application: **24.07.2024**
(21) Application number: 22869712.4
(22) Date of filing: 02.08.2022
(51) Int. Cl.: G06Q 30/04, G06Q 30/06

(54) **INFORMATION MANAGEMENT DEVICE, INFORMATION MANAGEMENT SYSTEM, METHOD, AND INFORMATION MANAGEMENT PROGRAM**

(30) Priority: 16.09.2021 JP 2021150926
(71) Applicant: NTT Communications Corporation, Tokyo 100-8019 (JP)
(72) Inventor: TAKADA, Tomonori, Tokyo 100-8019 (JP); KISHIDA, Tsunechika, Tokyo 100-8019 (JP); AKABORI, Hideaki, Tokyo 100-8019 (JP)
(74) Representative: Nederlandsch Octrooibureau
(86) International application number: PCT/JP2022/029697
(87) International publication number: WO 2023/042564

(57) **Abstract**

According to one aspect of the present invention, an information management device includes a controller configured to create and publish logic metadata based on setting information sent from a first user terminal; in response to designation of use logic and target data sent from a second user terminal which has viewed the published data, acquire and store the use logic and the target data in a secret area; and perform a calculation on the stored target data by using the use logic and store a calculation result in the secret area. The controller further determines an amount of charge for the use logic based on the setting information, provides the second user with the calculation result stored in the secret area, provides the first user and the second user with a report of the amount of charge, and deletes the use logic, the target data, and the calculation result stored in the secret area.

## Description

### FIELD

Embodiments of the present invention relate to an information management device, an information management system and method, and an information management program.

### BACKGROUND

Several devices for sharing data among a plurality of user terminals have been proposed.

For example, Patent Literature 1 discloses a device in which the same user data is stored in a plurality of user terminals, and when user data is updated in a user terminal of a certain user (updater), the user data is also updated in user terminals of other users.

### CITATION LIST

### PATENT LITERATURE

Patent Literature 1: Jpn. Pat. Appln. KOKAI Publication No. 2012-168630

### SUMMARY

### TECHNICAL PROBLEM

By using data sharing techniques, it is possible to provide a data distribution system in which a data owner allows another user to use data and obtains a use fee.

On the other hand, owners of unique logic for processing data or performing statistical processing also desire to obtain use fees by distributing the logic. However, when logic is shared by another user, the logic may be analyzed and imitated, and thus the conventional data sharing techniques cannot be used.

The present invention has been made in view of the above circumstances, and an object of the present invention is to allow information including logic to be used without being disclosed to others.

### SOLUTION TO PROBLEM

To solve the problems described above, one aspect of the present invention is an information management device configured to manage chargeable use by a second user for logic owned by a first user including: a communication interface configured to communicate with a first user terminal operated by the first user and a second user terminal operated by the second user; and a controller configured to control the information management device, the controller including a publication processing unit, an acquisition processing unit, a calculation processing unit, a determination processing unit, a provision processing unit, and a deletion processing unit. The publication processing unit creates logic metadata describing contents of the logic based on setting information sent from the first user terminal and related to the contents of the logic and a use fee, and publishes the created logic metadata. The acquisition processing unit acquires use logic and target data in response to designation of the use logic corresponding to the published logic metadata and the target data on which a calculation is performed using the use logic, the designation of the use logic and the target data being transmitted from the second user terminal, and stores the use logic and the target data in a secret area concealed from the first user and the second user. The calculation processing unit performs a calculation on the target data stored in the secret area using the use logic stored in the secret area, and stores the calculation result in the secret area. The determination processing unit determines an amount of charge that occurs between the first user and the second user related to the use of the use logic based on the setting information. The provision processing unit provides the second user with the calculation result stored in the secret area and providing the first user and the second user with a report of the determined amount of charge. The deletion processing unit deletes the use logic, the target data, and the calculation result stored in the secret area.

One aspect of the present invention is an information management system including the information management device of the present invention and a storage including a first user dedicated storage area and a second user dedicated storage area connected to the information management device via a network.

One aspect of a data sharing method of the present invention is an information management device method for managing chargeable use by a second user for logic owned by a first user, the method including: by a computer, creating logic metadata describing contents of the logic based on setting information sent from a first user terminal operated by the first user and related to the contents of the logic and a use fee, and publishing the created logic metadata; acquiring use logic and target data in response to designation of the use logic corresponding to the published logic metadata and the target data on which a calculation is performed using the use logic, the designation of the use logic and the target data being transmitted from a second user terminal operated by the second user, and storing the use logic and the target data in a secret area concealed from the first user and the second user; performing a calculation on the target data stored in the secret area by using the use logic stored in the secret area and storing a calculation result in the secret area; determining an amount of charge that occurs between the first user and the second user related to use of the use logic based on the setting information; providing the second user with the calculation result stored in the secret area and providing the first user and the second user with a report of the determined amount of the charge; and deleting the use logic, the target data, and the calculation result stored in the secret area.

One aspect of an information management program according to the present invention is a program for causing a computer to execute processing by each processing unit included in one aspect of the information management device according to the present invention.

### ADVANTAGEOUS EFFECTS OF INVENTION

According to each aspect of the present invention, information including logic can be used without publishing it to other persons.

### BRIEF DESCRIPTION OF THE DRAWINGS

FIG. 1 is a diagram showing an example of an overall configuration of an information management system according to a first embodiment of the present invention.
FIG. 2 is a block diagram showing an example of a hardware configuration of an information management device according to the first embodiment of the present invention.
FIG. 3 is a block diagram showing a software configuration of the information management device according to the first embodiment.
FIG. 4 is a schematic diagram showing an example of storage contents of a usage condition storage included in the information management device according to the first embodiment.
FIG. 5 is a schematic diagram showing an example of storage contents of a billing information storage included in the information management device according to the first embodiment.
FIG. 6 is a flowchart showing an example of a processing procedure of the information management device according to the first embodiment.
FIG. 7 is a diagram showing an example of an overall configuration of an information management system according to a second embodiment of the present invention.
FIG. 8 is a block diagram showing an example of a software configuration of the information management device according to the second embodiment of the present invention.
FIG. 9 is a schematic diagram showing an example of storage contents of a usage condition storage included in the information management device according to the second embodiment.
FIG. 10 is a schematic diagram showing an example of storage contents of a billing information storage included in the information management device according to the second embodiment.
FIG. 11 is a flowchart showing an example of a processing procedure of the information management device according to the second embodiment.
FIG. 12 is a flowchart showing an example of a processing procedure of the information management device according to a third embodiment of the present invention.

### DETAILED DESCRIPTION

Embodiments of the present invention will be described below with reference to the drawings.

### <First Embodiment>

### (Configuration Example)

### (1) System

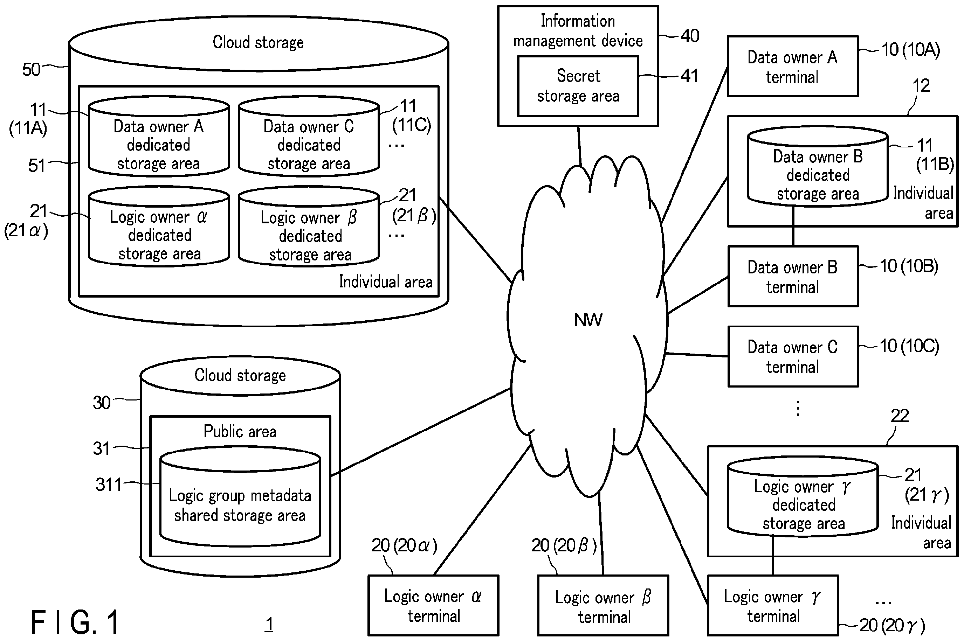

FIG. 1 is a diagram showing an overall configuration of the information management system 1 according to the first embodiment of the present invention. The information management system 1 is a system that uses logic owned by a logic owner for data owned by a data owner in a state where the logic is concealed, and provides the data owner with a use result.

The information management system 1 includes, for example, a data owner A terminal 10A, a data owner B terminal 10B, a data owner C terminal 10C, etc., a logic owner α terminal 20α, a logic owner β terminal 20β, a logic owner γ terminal 20γ, etc., a cloud storage 30, an information management device 40 according to the first embodiment of the present invention, and a cloud storage 50. If the data owner A terminal 10A, the data owner B terminal 10B, the data owner C terminal 10C, etc. are not particularly distinguished from each other, they are simply referred to as a data owner terminal 10. Further, if the logic owner α terminal 20α, the logic owner β terminal 20β, the logic owner γ terminal 20γ, etc. are not particularly distinguished from each other, they are simply referred to as a logic owner terminal 20. The data owner terminals 10, the logic owner terminals 20, the cloud storage 30, the information management device 40, and the cloud storage 50 are connected to one another via a network NW.

Data owner terminals 10, each being a personal computer (PC) used by a registered user who is registered as a user of the information management system 1, are disposed in, for example, different companies. FIG. 1 shows one data owner terminal 10 for one company, but each company may have a plurality of data owner terminals 10, for example, a plurality of data owner A terminals 10A. That is, each of the data owner A terminal 10A, the data owner B terminal 10B, the data owner C terminal 10C, etc. may be one terminal or a terminal group including a plurality of terminals.

Logic owner terminals 20, each being a PC used by a registered user who is registered as a user of the information management system 1, are disposed, for example, for different companies or different individuals. In FIG. 1, each logic owner terminal 20 may be a terminal group including a plurality of terminals, as in the case of the data owner terminal 10.

One of the data owner terminals 10 and one of the logic owner terminals 20 may be configured as one terminal physically located in the location of one registered user.

In addition, the information management system 1 may be formed as a system in one company. In this case, each data owner terminal 10 and each logic owner terminal 20 can be located in each branch office in one company, or can be located in a separate department in one company.

The information management system 1 includes, for each data owner terminal 10, a dedicated storage area isolated from the other data owner terminals 10. That is, the information management system 1 includes a data owner A dedicated storage area 11A dedicated to the data owner A terminal 10A, a data owner B dedicated storage area 11B dedicated to the data owner B terminal 10B, a data owner C dedicated storage area 11C dedicated to the data owner C terminal 10C, etc. The dedicated storage area of each data owner terminal 10 may be provided in a cloud storage or may be provided in an in-house server or the like corresponding to the data owner terminal 10. In the example of FIG. 1, the data owner A dedicated storage area 11A, the data owner C dedicated storage area 11C, etc. are provided in an individual area 51 of the cloud storage 50, and the data owner B dedicated storage area 11B is provided in an individual area 12 of a user B server (not shown). Here, the individual areas 12 and 51 are storage areas dedicated to the respective user terminals 10 that are connected to the network NW and isolated from the other user terminals 10 and the logic owner terminals 20. The individual area 12 is connected to the data owner B terminal 10B via an in-house LAN or the like. If the data owner A dedicated storage area 11A, the data owner B dedicated storage area 11B, the data owner C dedicated storage area 11C, etc. are not particularly distinguished from each other, they are simply referred to as a data owner dedicated storage area 11. Each data owner dedicated storage area 11 can store a plurality of pieces of data in the form of data files.

Further, the information management system 1 includes, for each logic owner terminal 20, a dedicated storage area isolated from the other logic owner terminals 20. That is, the information management system 1 includes a logic owner α dedicated storage area 21α dedicated to the logic owner α terminal 20α, a logic owner β dedicated storage area 21β dedicated to the logic owner β terminal 20β, a logic owner γ dedicated storage area 21γ dedicated to the logic owner γ terminal 20γ, etc. The dedicated storage area of each logic owner terminal 20 may be provided in a cloud storage or may be provided in an in-house server or the like corresponding to the logic owner terminal 20. In the example of FIG. 1, the logic owner α dedicated storage area 21α, the logic owner γ dedicated storage area 21γ, etc. are provided in the individual area 51 of the cloud storage 50, and the logic owner β dedicated storage area 21β is provided in an individual area 22 of a logic owner β server (not shown). Here, the individual area 22 is a storage area dedicated to a logic owner terminal 20 that is connected to the network NW and isolated from the other logic owner terminals 20 and each data owner terminal 10. The individual area 22 is connected to the logic owner β terminal 20β via an in-house LAN or the like. If the logic owner α dedicated storage area 21α, the logic owner β dedicated storage area 21β, the logic owner γ dedicated storage area 21γ, etc. are not particularly distinguished from each other, they are simply referred to as a logic owner dedicated storage area 21. Each logic owner dedicated storage area 21 can store a plurality of pieces of logic in the form of a logic file.

The cloud storage 30 is a first storage device including a public area 31. The public area 31 is a storage area accessible from any data owner terminals 10 and any logic owner terminals 20 of the registered user without limitation of the data owner terminals 10 and the logic owner terminals 20. The public area 31 includes a logic group metadata shared storage area 311 for storing a plurality of pieces of logic metadata. The logic metadata is metadata describing contents of the logic stored as a logic file in the logic owner dedicated storage area 21.

Here, the individual area 51 is formed in the cloud storage 50, which is a second storage device physically different from the cloud storage 30, which is the first storage device including the public area 31. However, the individual area 51 may be, by being logically separated, formed in the cloud storage 30 in which the public area 31 is formed. Also, the individual areas 12 and 22 may be formed in the individual area 51 of the cloud storage 50, or may be formed in the cloud storage 30 by being logically separated.

The information management device 40 creates metadata describing contents of the logic stored in the corresponding logic owner dedicated storage area 21 based on logic usage conditions designated by each logic owner terminal 20, and stores the metadata in the logic group metadata shared storage area 311. Further, the information management device 40 uses the logic designated by any of the data owner terminals 10 that have viewed the metadata stored in the logic group metadata shared storage area 311, for the data stored in the corresponding data owner dedicated storage area 11. Then, the information management device 40 stores the use result in the corresponding data owner dedicated storage area 11. The information management device 40 includes a secret storage area 41 which is a temporary storage isolated from each data owner terminal 10 and each logic owner terminal 20. When using the logic for target data for which the logic is to be used, the information management device 40 reads the target data and the use logic from the data owner dedicated storage area 11 and the logic owner dedicated storage area 21, and stores them in the secret storage area 41. Then, the information management device 40 obtains a use result by using the use logic stored in the secret storage area 41 with respect to the target data stored in the secret storage area 41. The information management device 40 stores the use result in the corresponding data owner dedicated storage area 11, and thereafter deletes the target data and the use logic stored in the secret storage area 41.

### (2) Information Management Device 40

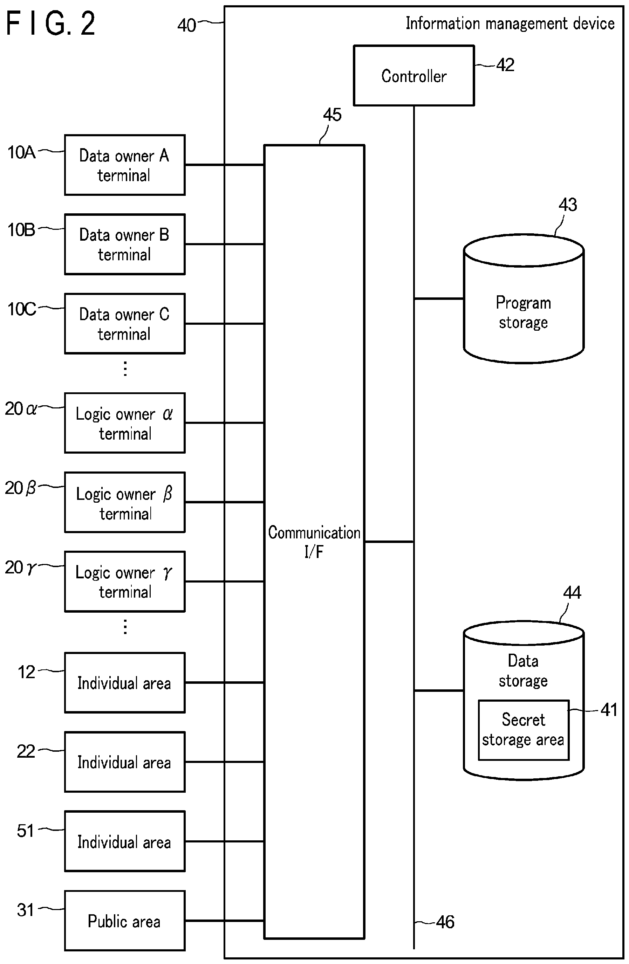

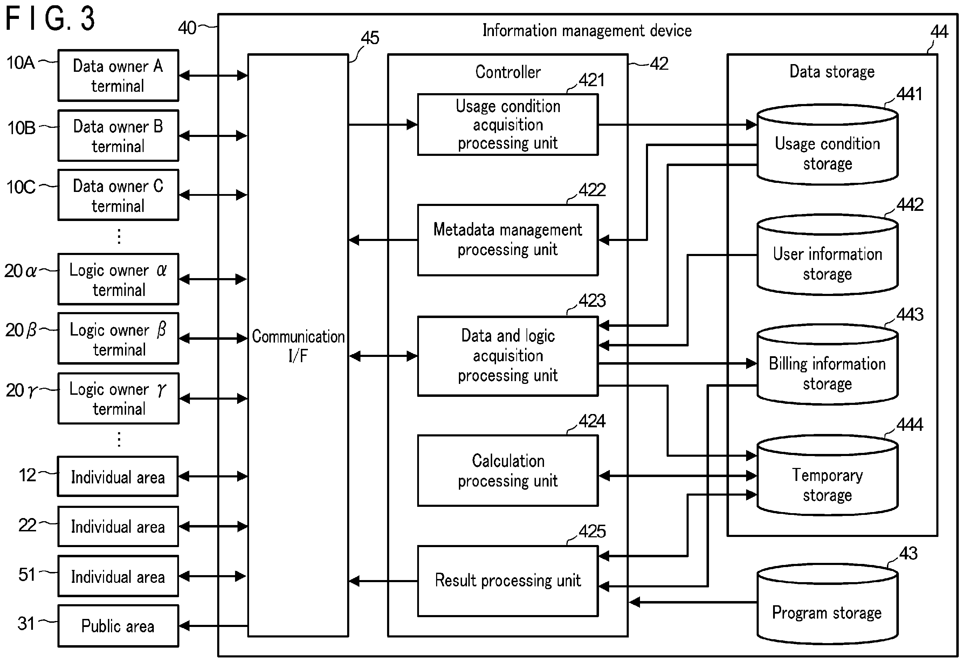

FIGS. 2 and 3 are block diagrams respectively showing examples of a hardware configuration and a software configuration of the information management device 40.

The information management device 40 includes a controller 42 including a hardware processor such as a central processing unit (CPU). In the information management device 40, the controller 42 is connected, via a bus 46, to a storage unit including a program storage 43 and a data storage 44, and to a communication interface (hereinafter, abbreviated as communication I/F) 45.

The communication I/F 45 performs transmission of various data among the data owner terminals 10, the logic owner terminals 20, the individual areas 12, 22, and 51, and the public area 31 using a communication protocol defined by the network NW under the control of the controller 42.

The program storage 43 is formed by combining, as a storage medium, for example, a nonvolatile memory which can be written to and read from whenever required, such as a hard disk drive (HDD) or a solid state drive (SSD), and a nonvolatile memory such as a read only memory (ROM). The program storage 43 stores middleware such as an operating system (OS), and in addition, programs necessary for executing various control processes according to the first embodiment of the present invention.

The data storage 44 is formed by combining, as a storage medium, for example, a nonvolatile memory which can be written to and read from whenever required, such as an HDD or an SSD, and a volatile memory such as a random access memory (RAM). The data storage unit 44 includes a usage condition storage 441, a user information storage 442, a billing information storage 443, and a temporary storage 444 as the secret storage area 41, as storage units necessary for implementing the first embodiment of the present invention.

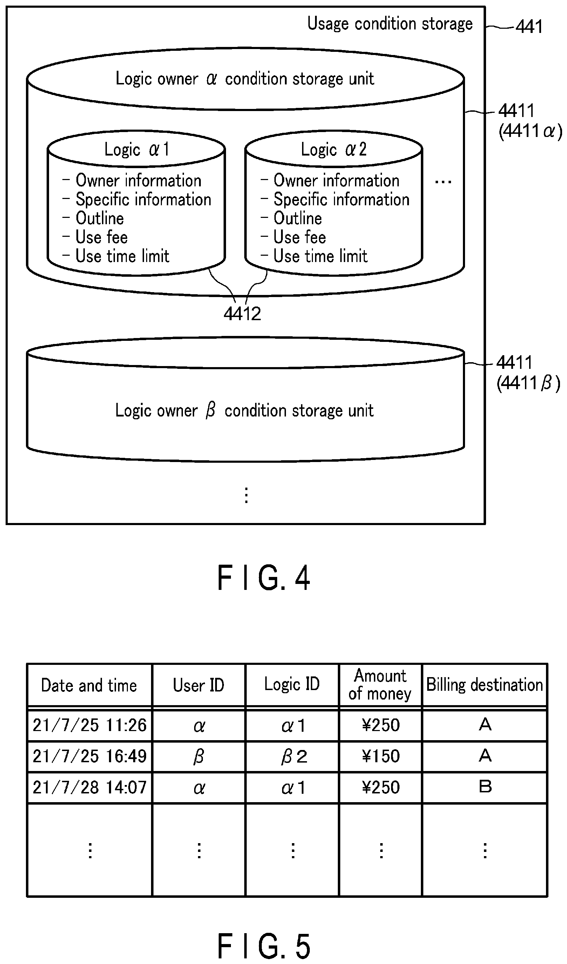

The usage condition storage unit 441 is used to store conditions designated by the logic owner when the data owner uses the logic. FIG. 4 is a schematic diagram showing an example of storage contents of the usage condition storage 441. The usage condition storage 441 includes a condition storage unit related to each logic owner terminal 20. That is, the usage condition storage 441 includes a logic owner α condition storage unit 4411α for the logic owner α terminal 20α, a logic owner β condition storage unit 4411β for the logic owner β terminal 20β, etc. If the logic owner α condition storage unit 4411α, the logic owner β condition storage unit 4411β, etc. are not particularly distinguished, they are simply referred to as a logic owner condition storage unit 4411.

Each logic owner condition storage unit 4411 stores logic usage conditions for each logic stored in the logic owner dedicated storage area 21 that corresponds to the corresponding logic owner terminal 20. For example, the logic owner α condition storage unit 4411α stores logic usage conditions 4412 for each of logic α1, α2, etc. stored in the logic owner α dedicated storage area 21α. The logic usage conditions 4412 include, for example, owner information, specific information, an outline, a use fee, a use time limit, etc.

The owner information is identification information for uniquely identifying a logic owner, and can be, for example, a user ID which is identification information for uniquely identifying a registered user. Here, the registered user is, for example, a contract user who uses the information management system 1 including the information management device 40 with payment of a predetermined use fee, and who can be a user of the data owner terminal 10 and a user of the logic owner terminal 20. The user ID is a number, a character string recognizable by a person, or a combination of a character string and a number, and is assigned by the information management device 40 at the time of user registration. The user ID may be a name that is designated discretionarily by the user and does not overlap with any other registered users.

The specific information is identification information for uniquely identifying logic, and can be, for example, a logic ID which is identification information for uniquely identifying the logic. The logic ID may be a name that is designated discretionarily by the registered user who is the logic owner when the logic owner stores the logic in the logic owner dedicated storage area 21. The logic ID may be a number, a character string recognizable by a person, or a combination of a character string and a number, and is assigned by the information management device 40 at the time of storing the logic.

The outline describes contents of the logic designated when the logic owner stores the logic in the logic owner dedicated storage area 21. For example, the outline can include what results are obtained from the logic for what data, the type of data which the logic addresses, benefits of the logic, etc.

The use fee is a price for using the logic, and is designated by the logic owner when the logic is stored in the logic owner dedicated storage area 21. That is, the use fee is an amount of money to be paid by the data owner to the logic owner when the data owner uses the logic for the data owned by the data owner. The use fee may be, but is not limited to, a per-use fee.

The use time limit is a time limit for using the logic, and is designated when the logic owner stores the logic in the logic owner dedicated storage area 21.

The user information storage 442 is used to store user information for each registered user who uses the information management device 40. The user information includes at least a user ID, contact information, and a settlement method. The user ID is as described above. The contact information may include, for example, personal information such as a company name, a department, an address, a name, a telephone number, etc., in addition to an email address of the registered user. The settlement method is information such as an account for settlement or a card number for payment of a use fee or the like of the information management system 1. Further, this settlement method can also be used for a user who is a logic owner to deposit the logic use fee collected from the user who is the data owner. Further, the user information may include authentication information such as a password for authentication or the like.

The billing information storage 443 is used to store billing information according to the use of the logic. FIG. 5 is a schematic diagram showing an example of storage contents of the billing information storage 443. The billing information storage 443 can be a database configured as a use history in which records including a use date and time, a user ID, a logic ID, an amount of money, and a billing destination are added each time logic is used. The user ID here is the user ID of the registered user, namely the logic owner, and the user ID of the registered user, namely the data owner who uses the logic, is the billing destination. The amount of money is charge stored as the logic usage condition 4412 in association with the logic ID.

As described above, the temporary storage 444 is used as the secret storage area 41 for storing the target data and the use logic when the use logic is used for the target data. Further, the temporary storage 444 is used to temporarily store various data and information generated during processing by the controller 42.

The controller 42 includes, as processing functions according to the first embodiment of the present invention, a usage condition acquisition processing unit 421, a metadata management processing unit 422, a data and logic acquisition processing unit 423, a calculation processing unit 424, and a result processing unit 425. These processing units 421 to 425 are all realized by, for example, causing the hardware processor of the controller 42 to execute programs stored in the program storage 43.

The usage condition acquisition processing unit 421 performs a process of receiving, via the communication I/F 45, usage conditions for logic stored in the logic owner dedicated storage area 21, which are transmitted from each logic owner terminal 20 via the network NW. The usage condition acquisition processing unit 421 further performs a process of storing the received usage conditions as the logic usage conditions 4412 in the corresponding logic owner condition storage unit 4411 in the usage condition storage 441.

The metadata management processing unit 422 performs a process of creating logic metadata representing contents of the corresponding logic based on the logic usage conditions 4412 stored in the usage condition storage 441. The metadata management processing unit 422 further performs a process of storing the created logic metadata in the logic group metadata shared storage area 311 of the public area 31 via the network NW using the communication I/F 45. As a result, the logic metadata is published to the registered user of the information management system 1.

The data and logic acquisition processing unit 423 performs a process of receiving, via the communication I/F 45, the designation of target data and use logic, which is transmitted from any of the data owner terminals 10 via the network NW. The designation of target data and use logic is transmitted from the data owner terminal 10 of the user who has viewed logic metadata in the public area 31 and who desired to use the logic for the data owned by himself/herself. Furthermore, the data and logic acquisition processing unit 423 performs a process of reading data and logic corresponding to the designated target data and use logic from the data owner dedicated storage area 11 and the logic owner dedicated storage area 21 via the network NW using the communication I/F 45. The data and logic acquisition processing unit 423 performs a process of storing the read data and logic in the temporary storage 444 which is the secret storage area 41.

The calculation processing unit 424 performs a calculation for the target data stored in the temporary storage 444 using the use logic also stored in the temporary storage 444, and performs a process of storing the calculation result in the temporary storage 444 which is the secret storage area 41. Furthermore, the calculation processing unit 424 determines the amount of charge to be charged to the user who is the data user based on the use fee in the logic usage conditions 4412 corresponding to the logic used, and updates the billing information stored in the billing information storage 443 with the determined amount of charge. That is, the calculation processing unit 424 performs a process of additionally storing a history of the use fee in the billing information storage 443.

The result processing unit 425 reads the calculation result stored in the temporary storage 444, and performs a process of writing the calculation result to the data owner dedicated storage area of the user who is the data user via the network NW using the communication I/F 45. In addition, the result processing unit 425 reads the billing information which is related to the use of the logic, and which is stored in the billing information storage 443, and performs settlement processing related to the use of the logic. Further, the result processing unit 425 performs a process of transmitting, via the network NW using the communication I/F 45, a settlement report to the contact of the user who is the data user and the user who is the logic owner stored in the user information storage 442. The result processing unit 425 further performs a process of deleting the target data and the use logic stored in the temporary storage 444.

### (Operation Example)

Next, an operation of the information management system 1 configured as described above will be described.

A user registration operation, an authentication operation when using the information management system 1, a file operating operation such as saving or reading a data file in or from the corresponding data owner dedicated storage area 11 from each data owner terminal 10 are known, and thus description thereof will be omitted. Similarly, a user registration operation, an authentication operation when using the information management system 1, and a logic operating operation such as saving or reading logic in or from the corresponding logic owner dedicated storage area 21 from each logic owner terminal 20 are equivalent to those of the data owner terminal 10, and thus description thereof will be omitted.

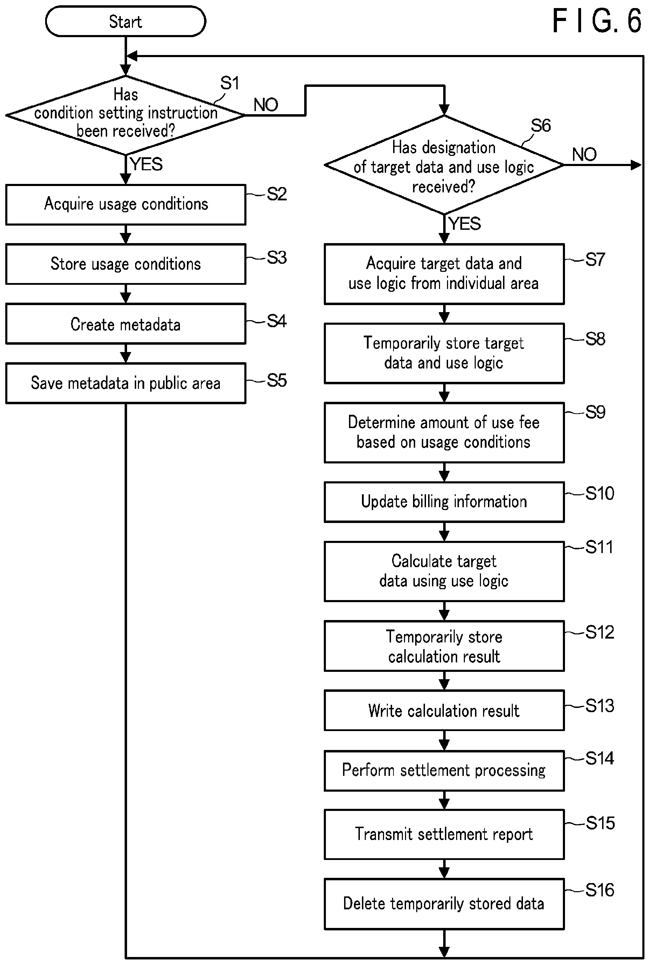

Hereinafter, the processing operation of the information management device 40 related to the use of the logic stored in the logic owner dedicated storage area 21 in a concealed state will be described. FIG. 6 is a flowchart showing an example of a processing procedure of the information management device 40.

In step S1, under the control of the usage condition acquisition processing unit 421, the controller 42 of the information management device 40 determines whether or not a condition setting instruction transmitted from any one of the logic owner terminals 20 and transferred via the network NW has been received via the communication I/F 45. The user who is the logic owner can perform authentication from the logic owner terminal 20, select the publication setting of the owned logic on a menu screen after the authentication, and perform the settings related to a publication condition on a setting screen to which the process proceeds according to the selection. Although not particularly illustrated, the controller 42 may have a function of a Web server that provides the logic owner terminal 20 with an authentication screen, a menu screen, and a setting screen, as a Web browser screen. Then, a condition setting instruction for target logic transmitted from the logic owner terminal 20 in response to a predetermined transmission operation on the setting screen of the Web browser is transmitted. If it is determined that the condition setting instruction has been received, the controller 42 determines YES in step S1 and proceeds to a processing operation in step S2. If it is determined that the condition setting instruction has not been received, the controller 42 determines NO in step S1 and proceeds to a processing operation in step S6.

In step S2, under the control of the usage condition acquisition processing unit 421, the controller 42 acquires, via the communication I/F 45, the usage conditions of the logic transmitted from the logic owner terminal 20 via the network NW together with or following the condition setting instruction.

Then, in step S3, under the control of the usage condition acquisition processing unit 421, the controller 42 causes the logic owner condition storage unit 4411 corresponding to the logic owner terminal 20 which is the transmission source to store the acquired usage conditions of the logic as the logic usage condition 4412 for the corresponding logic.

Thereafter, in step S4, the controller 42 creates metadata under the control of the metadata management processing unit 422. That is, the controller 42 reads the logic usage conditions 4412 stored in the logic owner condition storage unit 4411, and creates metadata including at least the outline and the use fee.

In step S5, under the control of the metadata management processing unit 422, the controller 42 saves the created metadata in the logic group metadata shared storage area 311 of the public area 31 via the network NW using the communication I/F 45. Thus, the created metadata is published to the registered users of the information management system 1. Thereafter, the controller 42 proceeds to the processing operation of step S1.

Further, in step S6, under the control of the data and logic acquisition processing unit 423, the controller 42 determines whether or not designation of target data and use logic transmitted from any of the data owner terminals 10 and transferred via the network NW has been received via the communication I/F 45. The registered user of the information management system 1 performs authentication from the data owner terminal 10, and can view the logic metadata stored in the logic group metadata shared storage area 311 of the public area 31, for example, on a browsing screen advanced as a result of selection of viewing of the published data from a menu screen after authentication. Then, a user who desires to use the viewed logic metadata with respect to the data owned by the user designates the data stored in the data owner dedicated storage area 11 of the user and the logic metadata to be used on the browsing screen. In response to these designations, the data owner terminal 10 transmits the designation of target data and use logic. If it is determined that the designation of target data and use logic has been received, the controller 42 determines YES in step S6, and proceeds to the processing operation of step S7. If it is determined that the designation of target data and use logic has not been received, the controller 42 determines NO in step S6 and proceeds to the processing operation determined in step S1.

In step S7, under the control of the data and logic acquisition processing unit 423, the controller 42 acquires the designated target data and use logic via the network NW using the communication I/F 45. Specifically, the controller 42 acquires the designated target data and use logic from the data owner dedicated storage area 11 corresponding to the data owner terminal 10 of the transmission source and the logic owner dedicated storage area 21 corresponding to the designated use logic.

In step S8, the controller 42 stores the acquired target data and use logic in the temporary storage 444 which is the secret storage area 41 under the control of the data and logic acquisition processing unit 423.

Next, in step S9, under the control of the data and logic acquisition processing unit 423, the controller 42 reads the usage conditions of the logic stored as the logic usage conditions 4412 in the temporary storage 444 from the usage condition storage 441, and determines the amount of charge of the logic based on the usage conditions.

Then, in step S10, under the control of the data and logic acquisition processing unit 423, the controller 42 updates the billing information in the billing information storage 443 with the determined amount of charge. That is, the controller 42 additionally stores, in the billing information storage 443, records including a current date and time, a user ID for identifying the owner of logic to be used, a logic ID for identifying the logic to be used, a determined amount of charge, and the user ID corresponding to the data owner terminal 10 which is the transmission source of the designation of target data and use logic and which is the billing destination. The controller 42 can acquire the user IDs of the owner of the logic and the billing destination from the user information storage 442.

In step S11, under the control of the calculation processing unit 424, the controller 42 performs a calculation on the target data stored in the temporary storage 444 which is the secret storage area 41, using the use logic also stored in the temporary storage 444.

Then, in step S12, under the control of the calculation processing unit 424, the controller 42 stores the calculation result in the temporary storage 444 which is the secret storage area 41.

Thereafter, in step S13, under the control of the result processing unit 425, the controller 42 reads the calculation result stored in the temporary storage unit 444 which is the secret storage area 41. The controller 42 writes the read calculation result in the data owner dedicated storage area 11 corresponding to the data owner terminal 10 that is the transmission source of the designation of target data and use logic, via the network NW using the communication I/F 45.

In step S14, under the control of the result processing unit 425, the controller 42 reads the billing information related to the current logic use stored in the billing information storage 443, and performs settlement processing. For example, the controller 42 reads user information of the data owner and the logic owner from the user information storage 442 based on the read billing information, and performs the settlement processing for the amount of charge by the settlement method included in each piece of user information. That is, the controller 42 performs a billing process for the user who is the data owner and performs a deposit process for the user who is the logic owner. The deposit process may be a reduction in the use fee of the information management system 1. The amount of money to be billed and/or deposited may include a settlement commission by the information management system 1.

Then, in step S15, under the control of the result processing unit 425, the controller 42 transmits a settlement report to the user who is the data owner and the user who is the logic owner via the network NW using the communication I/F 45, based on the contact information included in the read user information.

Thereafter, in step S 16, under the control of the result processing unit 425, the controller 42 deletes the information, including the target data and use logic, stored in the temporary storage 444 which is the secret storage area 41 in each processing operation shown in this flowchart. Then, the controller 42 proceeds to the processing operation of step S1.

### (Working Effects)

As described above, the information management device 40 according to the first embodiment of the present invention is an information management device configured to manage chargeable use of logic owned by a first user who is a logic owner and used by a second user who is a data owner. The information management device 40 includes the communication I/F 45 configured to communicate with the logic owner terminal 20 as a first user terminal operated by the logic owner and the data owner terminal 10 as a second user terminal operated by the data owner, and the controller 42 configured to control the information management device 40. The controller 42 includes the usage condition acquisition processing unit 421, the metadata management processing unit 422, the data and logic acquisition processing unit 423, the calculation processing unit 424, and the result processing unit 425. The usage condition acquisition processing unit 421 and the metadata management processing unit 422 function as a publication processing unit that creates logic metadata describing contents of the logic based on setting information sent from the logic owner terminal 20 and related to the contents of the logic and the use fee, and publishes the created logic metadata. The data and logic acquisition processing unit 423 functions as an acquisition processing unit that acquires use logic and target data, in response to the designation of the use logic corresponding to the published logic metadata and the target data for which the calculation is performed using the use logic, sent from the data owner terminal 10, and stores the use logic and the target data in the secret storage area 41 which is a secret area concealed from the logic owner and the data owner. The data and logic acquisition processing unit 423 functions as a determination processing unit that determines an amount of charge that occurs between the logic owner and the data owner related to the use of the use logic based on the setting information. The calculation processing unit 424 performs a calculation on the target data stored in the secret storage area 41 using the use logic stored in the secret storage area 41, and stores the calculation result in the secret storage area 41. The result processing unit 425 functions as a provision processing unit that provides the data owner with the calculation result stored in the secret storage area 41. Further, the result processing unit 425 functions as a deletion processing unit that deletes the use logic, the target data, and the calculation result stored in the secret storage area 41.

Therefore, the logic owner can allow the logic owned by the logic owner himself or herself to be used by a data owner who is a person other than the logic owner without publishing the logic.

Further, in the information management device 40 according to the first embodiment, the data and logic acquisition processing unit 423 functions as a determination processing unit that determines the amount of charge that occurs between the logic owner and the data owner related to use of the use logic based on the setting information. The result processing unit 425 further functions as a settlement processing unit that performs settlement processing between users according to the determined amount of charge, and provides a settlement report regarding the settlement processing to each registered user, here, the logic owner and the data owner, as a report of the amount of charge.

Thus, the logic owner can obtain the use fee of the logic from the data owner.

Further, in the information management device 40 according to the first embodiment, at least one logic file owned by the logic owner is stored in the logic owner dedicated storage area 21 accessible only by the logic owner, and at least one data file owned by the data owner is stored in the data owner dedicated storage area 11 accessible only by the data owner. Then, in response to the designation of the use logic and the target data, the data and logic acquisition processing unit 423 as an acquisition processing unit acquires a corresponding logic file as the use logic from one or more logic files stored in the logic owner dedicated storage area 21. Further, the data and logic acquisition processing unit 423 acquires a corresponding data file as target data from one or more data files stored in the data owner dedicated storage area 11. The result processing unit 425 as a provision processing unit writes the calculation result in the data owner dedicated storage area 11.

Therefore, the logic owner can entrust the use management of the logic owned by the logic owner to the information management device, and need not deal with every use of logic of the data owner.

### <Second Embodiment>

Next, an information management device 40 according to a second embodiment of the present invention will be described. In the first embodiment, the data owner uses logic provided by a logic owner for data owned by a data owner himself or herself. In contrast, in the second embodiment, a third party who does not own data uses data provided by a data owner and logic provided by a logic owner.

Herein, only parts of the configuration example, operation example, and working effect that differ from those of the above first embodiment will be described, and descriptions of similar parts will be omitted.

### (Configuration Example)

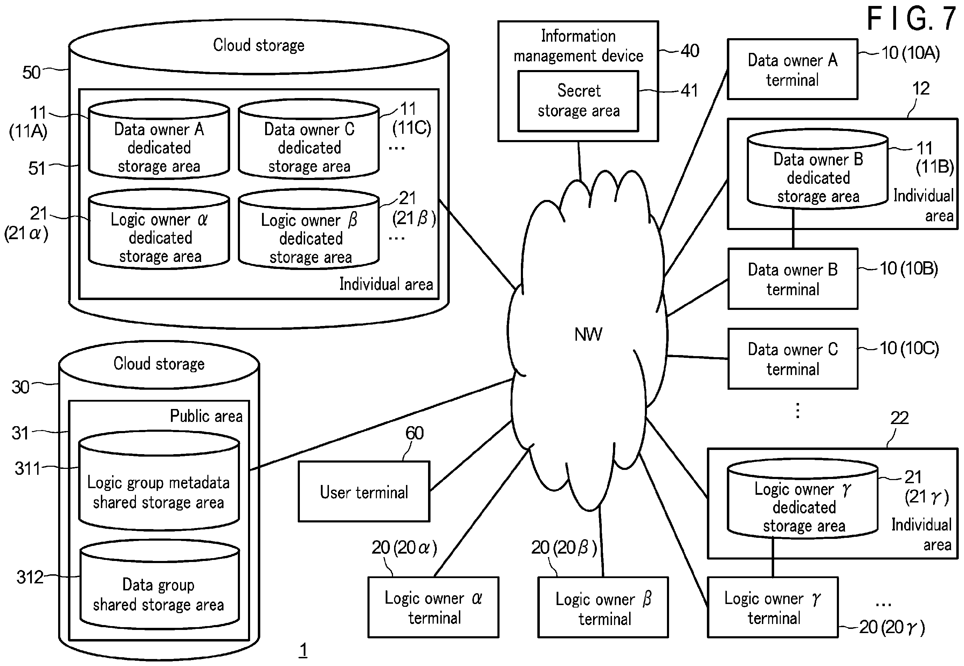

FIG. 7 is a diagram showing an overall configuration of an information management system 1 according to the second embodiment of the present invention. The information management system 1 further includes a user terminal 60 connected to the network NW. Although FIG. 7 shows one user terminal 60, the information management system 1 may include a plurality of user terminals 60 used by different users.

The public area 31 of the cloud storage 30 further includes a data group shared storage area 312 that stores a plurality of pieces of data file metadata or processed data. The data file metadata is metadata describing contents of data stored as a data file in the data owner dedicated storage area 11. The processed data is data obtained by processing data stored as a data file in the data owner dedicated storage area 11. The processing includes, but is not limited to, abstraction (generalization) such as reduction of the number of significant digits of data, anonymization such as deletion of personal information or data generation source information, and the like.

In the present embodiment, the public area 31 is not only opened to registered users as in the first embodiment, but is also opened to the general public.

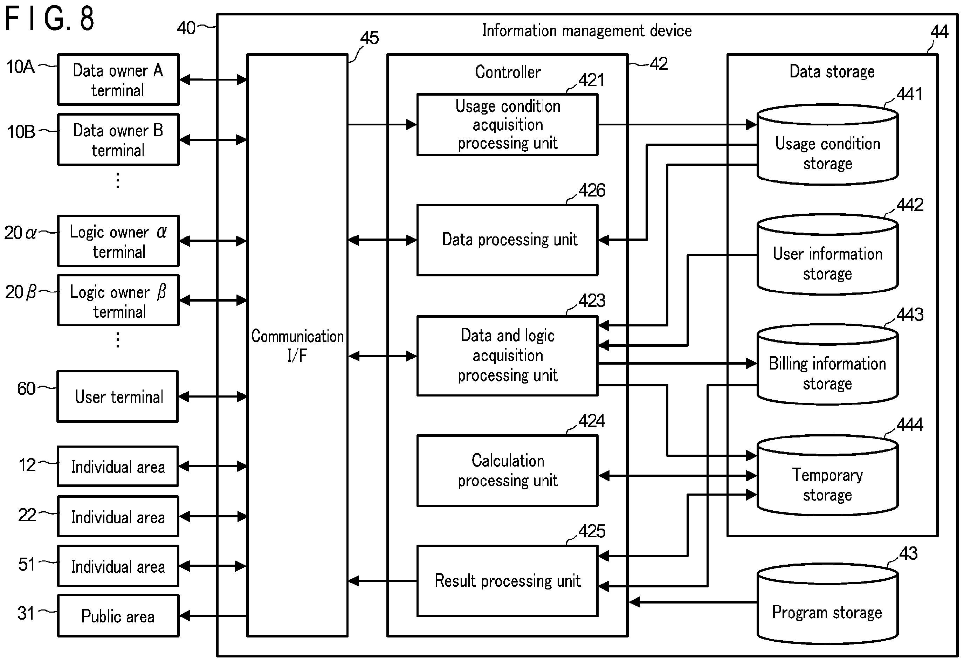

FIG. 8 is a block diagram showing an example of a software configuration of the information management device 40 according to the second embodiment of the present invention. In the present embodiment, the communication I/F 45 further performs various data transmission with respect to the user terminal 60 using a communication protocol defined by the network NW under the control of the controller 42. The controller 42 includes a data processing unit 426 instead of the metadata management processing unit 422 in the first embodiment.

The data processing unit 426 performs a process of creating logic metadata for logic to be published and storing the logic metadata in the logic group metadata shared storage area 311, similarly to the metadata management processing unit 422 in the first embodiment. In addition, the data processing unit 426 performs a process of creating data file metadata or processed data for data to be published and storing the data file metadata or the processed data in the data group shared storage area 312.

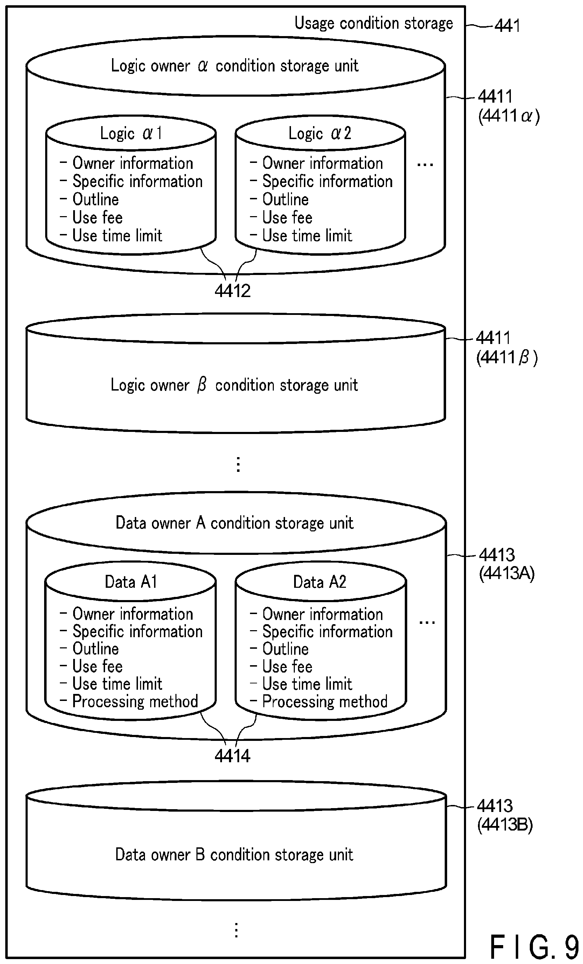

FIG. 9 is a schematic diagram showing an example of storage contents of the usage condition storage 441. In the present embodiment, the usage condition storage 441 includes a condition storage unit related to each of the data owner terminals 10 in addition to the logic owner condition storage unit 4411. That is, the usage condition storage 441 includes a data owner A condition storage unit 4413A for the data owner A terminal 10A, a data owner B condition storage unit 4413B for the data owner B terminal 10B, etc. If the data owner A condition storage unit 4413A, the data owner B condition storage unit 4413B, etc. are not particularly distinguished from each other, they are hereinafter simply referred to as a data owner condition storage unit 4413.

Each data owner condition storage unit 4413 stores data usage conditions for each data file stored in the data owner dedicated storage area 11 that corresponds to the corresponding data owner terminal 10. For example, the data owner A condition storage unit 4413A stores data file usage conditions 4414 for each of data files A1, A2, etc. stored in the data owner A dedicated storage area 11A. The data file usage conditions 4414 include, for example, owner information, specific information, an outline, a use fee, a use time limit, etc., similarly to the logic usage conditions 4412.

The owner information is identification information for uniquely identifying a data owner, and can be, for example, a user ID.

The specific information is identification information for uniquely identifying data, and can be, for example, a data file ID which is identification information for uniquely identifying the data file. The data file ID may be a name that is designated discretionarily by the registered user who is the data owner when the data owner stores the data as a data file in the data owner dedicated storage area 11. The data file ID may be a number, a character string recognizable by a person, or a combination of a character string and a number, and is assigned by the information management device 40 at the time of storing the data file.

The outline describes contents of the data designated when the data owner stores the data file in the data owner dedicated storage area 11. For example, the outline may include the type of the data, the machine or situation that generated the data, and the like.

The use fee is a price for using the data, and is designated by the data owner when the data owner stores the data file in the data owner dedicated storage area 11. That is, the use fee is an amount of money to be paid by the data user to the data owner when the data user uses the data. The use fee may be, but is not limited to, a per-use fee.

The use time limit is a time limit for using the data, and is designated when the data owner stores the data file in the data owner dedicated storage area 11.

The data processing unit 426 can create data file metadata based on the data file usage conditions 4414.

The data file usage conditions 4414 may include a processing method. The processing method is information for specifying a processing method of the data file used when the processed data is created from the data file.

The data processing unit 426 can create processed data based on the processing method in the data file usage conditions 4414.

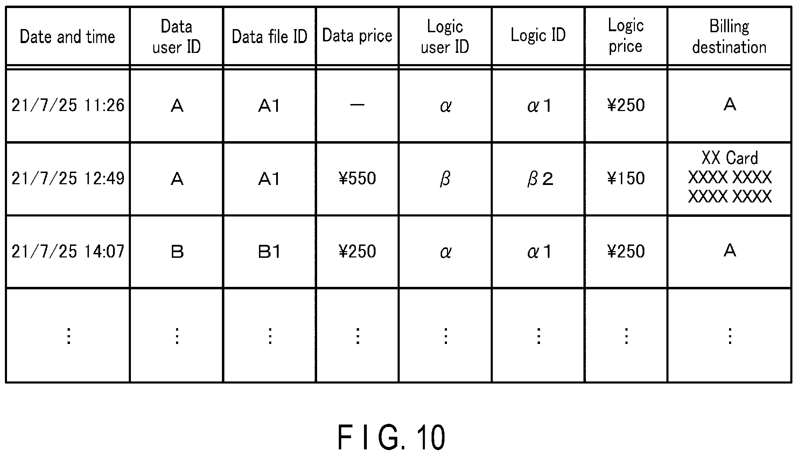

The billing information storage 443 in the present embodiment is different from that in the first embodiment in storage contents. FIG. 10 is a schematic diagram showing an example of storage contents of the billing information storage 443. Records of the billing information storage 443 include a use date and time, a data user ID, a data file ID, a data price, a logic user ID, a logic ID, a logic price, and a billing destination.

The data user ID is a user ID of a registered user who is a data owner. The data file ID is a data file ID of target data to be used, which is designated by the user. The data price is a use fee stored as the data file usage conditions 4414 in association with the data file ID.

The logic user ID is a user ID of a registered user who is a logic owner. The logic ID is a logic ID of use logic to be used, which is designated by the user. The logic price is a use fee stored as the logic usage conditions 4412 in association with the logic ID.

If the user who uses the logic is a data owner, the billing destination is the user ID of the data owner. In this case, no data use fee is incurred, and therefore the data price is left blank. Further, in a case where a user who does not own data and logic uses data of a data owner and logic of a logic owner, billing destination information such as an account for settlement or a card number for the user to pay a use fee or the like can be stored in the billing destination. The billing information can be entered from the user terminal 60 when the user uses data and logic.

In the example of FIG. 10, the first record indicates billing information in a case where a data owner A uses logic α1 owned by a logic owner α for a data file A1 owned by the data owner A. The third record indicates billing information in a case where the same data owner A uses the logic α1 owned by the logic owner α for a data file B1 owned by another data owner B. On the other hand, the second record indicates billing information in a case where a user of the user terminal 60 uses logic β2 owned by a logic owner β for the data file A1 owned by the data owner A.

### (Operation Example)

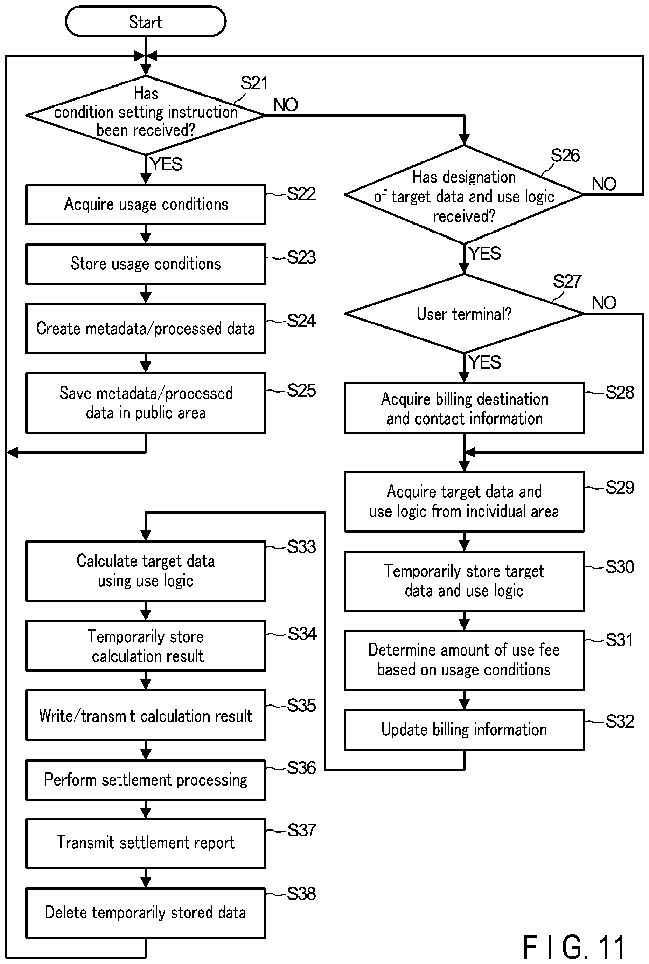

FIG. 11 is a flowchart showing an example of an overall processing procedure of public area management processing performed by the information management device 40 according to the second embodiment.

In step S21, under the control of the usage condition acquisition processing unit 421, the controller 42 of the information management device 40 determines whether or not a condition setting instruction transmitted from any of the data owner terminals 10 or any of the logic owner terminals 20 and transferred via the network NW has been received via the communication I/F 45. That is, the condition setting instruction is transmitted from the logic owner terminal 20 in step S1 of the first embodiment, but may also be transmitted from the data owner terminal 10 in the present embodiment. The user who is the data owner can perform authentication from the data owner terminal 10, select the publication setting of the own data file on a menu screen after the authentication, and perform the settings related to publication conditions on a setting screen to which the process proceeds according to the selection. Then, in response to a predetermined transmission operation on the setting screen, a condition setting instruction for target data is transmitted from the data owner terminal 10.

In step S22, the controller 42 acquires usage conditions of the data file or the logic via the communication I/F 45 under the control of the usage condition acquisition processing unit 421. The usage conditions of the data file or the logic are transmitted from the data owner terminal 10 or the logic owner terminal 20 via the network NW together with or following the condition setting instruction.

In step S23, under the control of the usage condition acquisition processing unit 421, the controller 42 causes the data owner condition storage unit 4413 corresponding to the data owner terminal 10 of the transmission source to store the usage conditions of the acquired data file as the data file usage conditions 4414. Alternatively, the controller 42 causes the logic owner condition storage unit 4411 corresponding to the logic owner terminal 20 of the transmission source to store the logic usage conditions of the acquired logic as the logic usage conditions 4412.

Thereafter, in step S24, the controller 42 creates metadata or processed data under the control of the data processing unit 426. That is, if the condition setting for the logic is performed, the controller 42 reads the logic usage conditions 4412 stored in the logic owner condition storage unit 4411, and creates logic metadata including at least the outline and the use fee. If the condition setting for the data file is performed, the controller 42 reads the data file usage conditions 4414 stored in the data owner condition storage unit 4413, and creates data file metadata including at least the outline and the use fee. If the data file usage conditions 4414 include a processing method, the corresponding data file is read from the corresponding data owner dedicated storage area 11, and processing is performed based on the processing method to create processed data. Both the data file metadata and the processed data may be created for the data file. The data file usage conditions 4414 may include designation of whether data file metadata or processed data is to be created and published.

Then, in step S25, under the control of the data processing unit 426, the controller 42 stores the created metadata or processed data in the logic group metadata shared storage area 311 or the data group shared storage area 312 of the public area 31 via the network NW using the communication I/F 45. Thus, the created metadata and/or processed data are published to the registered users of the information management system 1. Thereafter, the controller 42 proceeds to the processing operation of step S21.

In step S26, under the control of the data and logic acquisition processing unit 423, the controller 42 determines whether designation of target data and use logic has been received via the communication I/F 45. In the present embodiment, the designation of target data and use logic is transmitted from any one of the data owner terminals 10 or any one of the user terminals 60 via the network NW. That is, in the present embodiment, the designation of target data and use logic can be transmitted from the user terminal 60.

In the present embodiment, the user of the user terminal 60 is a general user who is not a registered user. The general user can view data on a browsing screen provided for general publication, for example, without performing authentication from the user terminal 60. In this case, the data that can be viewed includes the logic metadata stored in the logic group metadata shared storage area 311, the data file metadata stored in the data group shared storage area 312, and the processed data stored in the data group shared storage area 312 of the public area 31. Then, the general user who desires to use the viewed logic metadata for data corresponding to any of the viewed data file metadata or processed data designates the data file metadata or processed data and logic metadata on the browsing screen. The user terminal 60 transmits the designation of target data and use logic in response to the designation. If it is determined that the designation of target data and use logic has been received, the controller 42 determines YES in step S26, and proceeds to the processing operation of step S27. If it is determined that the designation of target data and use logic has not been received, the controller 42 determines NO in step S26, and proceeds to the processing operation of step S21.

In step S27, under the control of the data and logic acquisition processing unit 423, the controller 42 determines whether the transmission source of the designation of target data and use logic is the user terminal 60. If it is determined that the transmission source is not the user terminal 60, the controller 42 determines NO in step S27, and proceeds to the processing operation in step S29. If it is determined that the transmission source is the user terminal 60, the controller 42 determines YES in step S27, and proceeds to the processing operation in step S28.

In step S28, under the control of the data and logic acquisition processing unit 423, the controller 42 inquires of the user terminal 60 that is the transmission source about the billing destination of the use fee and the contact information such as the email address via the network NW using the communication I/F 45. Then, the controller 42 acquires the billing destination and the contact information from the user terminal 60 that is the transmission source. The controller 42 temporarily stores the acquired billing destination and contact information in the temporary storage 444. Thereafter, the controller 42 proceeds to the processing operation of step S29.

In step S29, under the control of the data and logic acquisition processing unit 423, the controller 42 acquires the designated target data and use logic via the network NW using the communication I/F 45. Specifically, the controller 42 acquires the designated target data and use logic from the data owner dedicated storage area 11 corresponding to the data file of the designated target data and the logic owner dedicated storage area 21 corresponding to the designated use logic.

Then, in step S30, under the control of the data and logic acquisition processing unit 423, the controller 42 stores the acquired target data and use logic in the temporary storage 444 which is the secret storage area 41.

Next, in step S31, under the control of the data and logic acquisition processing unit 423, the controller 42 reads the usage conditions of the logic and the data file stored as the logic usage conditions 4412 and the data file usage conditions 4414 in the temporary storage 444 from the usage condition storage 441. Then, the controller 42 determines the amount of charge for the logic or the amounts of the use fees for the logic and the data file based on the read usage conditions. That is, if the transmission source of the designation of target data and use logic is the data owner terminal 10, the controller 42 determines the amount of charge for the logic. If the transmission source of the designation of target data and use logic is the data owner terminal 10 of a registered user other than the owner of the target data or the user terminal 60 of a general user, the controller 42 determines the amounts of charges respectively for the logic and the data file.

Then, in step S32, under the control of the data and logic acquisition processing unit 423, the controller 42 updates the billing information in the billing information storage 443 with the determined amount of charge. That is, the controller 42 additionally stores, in the billing information storage unit 443, records including a current date and time, a data user ID for identifying the owner of the target data, a data file ID for identifying the target data, the determined amount of charge for the data file, a logic user ID for identifying the owner of the use logic, a logic ID for identifying the use logic, the determined amount of a use fee for the logic, and the billing destination. The controller 42 can acquire information about the owners of the logic and the data from the user information storage 442. If the transmission source of the designation of target data and use logic is the data owner terminal 10 or the data owner terminal 10 of the registered user other than the owner of the target data, the controller 42 acquires the user ID of the billing destination from the user information storage unit 442. If the transmission source of the designation of target data and use logic is the user terminal 60 of a general user, the controller 42 can read out the billing destination acquired and stored in the temporary storage 444 in step S28 and can use the billing destination.

Thereafter, in step S33, under the control of the calculation processing unit 424, the controller 42 performs a calculation on the target data stored in the temporary storage 444 which is the secret storage area 41, using the use logic also stored in the temporary storage 444.

Then, in step S34, under the control of the calculation processing unit 424, the controller 42 stores the calculation result in the temporary storage 444 which is the secret storage area 41.

Thereafter, in step S35, under the control of the result processing unit 425, the controller 42 reads the calculation result stored in the temporary storage unit 444 which is the secret storage area 41. The controller 42 writes the read calculation result in the data owner dedicated storage area 11 corresponding to the data owner terminal 10 that is the transmission source of the designation of target data and use logic, via the network NW using the communication I/F 45. Alternatively, the controller 42 transmits the read calculation result to the user terminal 60 that is the transmission source of the designation of target data and use logic. The transmission of the calculation result to the user terminal 60 may be performed by displaying the calculation result on a result display screen that is advanced from an inquiry screen of the billing destination of the use fee in step S28, or may be performed by separately transmitting the calculation result by email or the like. In the latter case, an email address may be input on the inquiry screen of the billing destination of the use fee.

Next, in step S36, under the control of the result processing unit 425, the controller 42 reads the billing information related to the current use of the logic or the billing information related to the current use of the data file and the logic stored in the billing information storage 443, and performs settlement processing. The user of the user terminal 60, who is a general user, is charged for the use of the information management system 1 in addition to the use fee of the data file and the logic.

Then, in step S37, the controller 42 transmits a settlement report under the control of the result processing unit 425. That is, for a registered user, the settlement report is transmitted via the network NW using the communication I/F 45 based on the contact information included in the read user information. For a general user, the contact information acquired and stored in the temporary storage 444 in step S28 is read out, and a settlement report is transmitted to the general user through the communication I/F 45 via the network NW using the contact information.

Thereafter, in step S38, under the control of the result processing unit 425, the controller 42 deletes the information, including the target data and use logic, stored in the temporary storage 444 which is the secret storage area 41 in each processing operation shown in this flowchart. Then, the controller 42 proceeds to the processing operation of step S21.

### (Working Effects)

As described above, the information management device 40 according to the second embodiment of the present invention includes the data processing unit 426 as a publication processing unit instead of the metadata management processing unit 422 of the first embodiment. The data processing unit 426 performs at least one of creating and publishing data file metadata describing contents of the data file based on the setting information sent from the data owner terminal 10 and related to the contents of the data file and the use fee, and creating and publishing processed data by processing the data file based on the setting information sent from the data owner terminal 10 and related to the processing method of the data file and the use fee. The data and logic acquisition processing unit 423 as an acquisition processing unit acquires a corresponding logic file as use logic from at least one logic file stored in the logic owner dedicated storage area 21 in response to designation of use logic and target data from the user terminal 60 as a third user terminal operated by a user who is a third user different from the logic owner and the data owner. Further, the data and logic acquisition processing unit 423 acquires a corresponding data file as target data from at least one data file stored in the data owner dedicated storage area 11. The data and logic acquisition processing unit 423 as a determination processing unit determines, as the amount of charge, the amount of charge that occurs between the user and each of the logic owner and the data owner regarding the use of the use logic and the data file, based on the setting information. The result processing unit 425 as a provision processing unit provides the logic owner, the data owner, and the user with the settlement report.

Therefore, not only the logic but also the data file can be used by a user who is a person other than the logic owner and the data owner without publishing the logic and the data file. The logic owner can obtain the use fee of the logic from the user, and the data owner can obtain the use fee of the data file from the user.

### <Third Embodiment>

In the second embodiment, the case where the user who is a general user who does not own data and logic uses data of the data owner and logic of the logic owner has been described, but the logic may be used for user's own data.

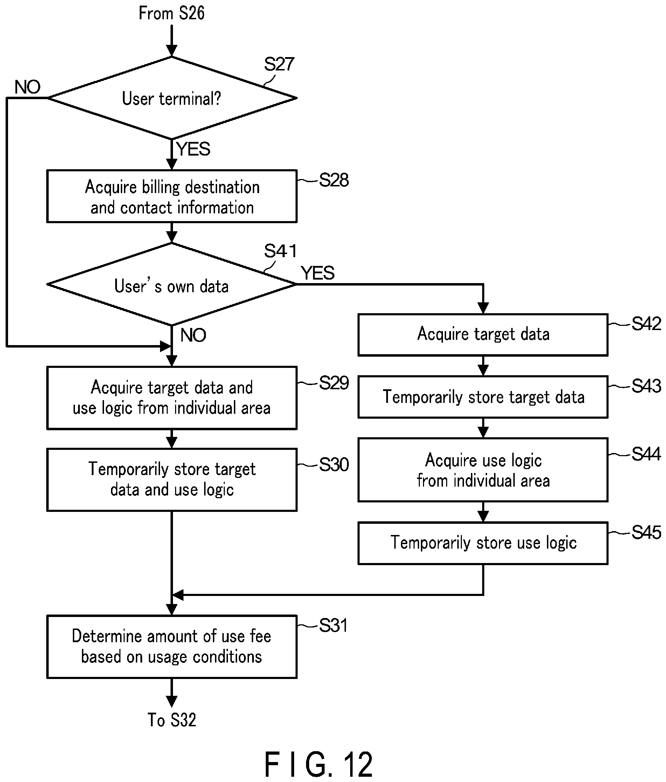

FIG. 12 is a flowchart showing an example of a processing procedure of public area management processing performed by the information management device 40 according to the third embodiment. FIG. 12 shows a part different from the flowchart of FIG. 11 in the second embodiment.

That is, after acquiring the billing destination and the contact information from the user terminal 60 that is the transmission source in step S28, the controller 42 proceeds to the processing operation of step S41 in the present embodiment.

In step S41, under the control of the data and logic acquisition processing unit 423, the controller 42 determines whether the target data designated by the user terminal 60 is the user's own data. If the designated target data is not a data file stored in the data owner dedicated storage area 11, the controller 42 determines that the target data is the user's own data. If it is determined that the target data is not the user's own data, the controller 42 determines NO in step S41, and proceeds to the processing operation in step S29. If it is determined that the target data is the user's own data, the controller 42 determines YES in step S41, and proceeds to the processing operation in step S42.

In step S42, under the control of the data and logic acquisition processing unit 423, the controller 42 inquires of the user terminal 60 that is the transmission source about the target data via the network NW using the communication I/F 45 and acquires the target data from the user terminal 60 that is the transmission source.

Then, in step S43, under the control of the data and logic acquisition processing unit 423, the controller 42 stores the acquired target data in the temporary storage 444 which is the secret storage area 41.

In step S44, under the control of the data and logic acquisition processing unit 423, the controller 42 acquires the designated use logic from the logic owner dedicated storage area 21 corresponding to the designated use logic via the network NW using the communication I/F 45.

Then, in step S45, under the control of the data and logic acquisition processing unit 423, the controller 42 stores the acquired use logic in the temporary storage 444 which is the secret storage area 41. Thereafter, the controller 42 proceeds to the processing operation of step S31.

The processing operations in and after step S31 are the same as those of the second embodiment described above. However, in the present embodiment, the target data is owned by the user who is the user of the user terminal 60, and the data file stored in the data owner dedicated storage area 11 is not used. Therefore, the amount of charge determined in step S31 is related to the use fee of the logic, as in the first embodiment, and the data ID, the data file ID, and the data price in the records to be added are blank in the billing information of the billing information storage 443 updated in step S32. Naturally, therefore, the settlement report transmitted in step S37 is also transmitted only to the registered user of the logic owner and the user.

### (Working Effects)

As described above, in the information management device 40 according to the third embodiment of the present invention, at least one logic file owned by the logic owner is stored in the logic owner dedicated storage area 21 accessible only by the logic owner. Then, the data and logic acquisition processing unit 423 as the acquisition processing unit acquires the corresponding logic file as the use logic from at least one logic file stored in the logic owner dedicated storage area 21 in response to designation of use logic and target data from the user terminal 60 operated by the user who is the second user. Further, the data and logic acquisition processing unit 423 acquires target data from the user terminal 60. Then, the result processing unit 425 as the provision processing unit transmits the calculation result and the settlement report to the user terminal 60.

Therefore, the logic owner can allow the logic owned by the logic owner himself or herself to be used by a user who is a person other than the logic owner without publishing the logic.

### <Other Embodiments>

In the first to third embodiments, the information management device 40 performs the settlement of charge for the use of the logic or charge for the use of the logic and the use of the data. The information management device 40 may perform the processing operation from the determination of the amount charge to the updating of the billing information, and the actual settlement processing may be performed by a separate settlement device connected via the network NW. In this case, since the settlement report is made by the settlement device, the information management device 40 may simply report the amount of charge.

The order of the processing steps shown in the flowcharts of FIGS. 6 and 11 is an example, and the present invention is not limited to this order. For example, the order of steps S9 and S10 and steps S11 to S13 in FIG. 6 may be reversed. Each processing step may be changed in processing order or the like or may be processed in parallel as long as there is no inconsistency with a preceding or succeeding processing step.

Although the embodiments of the present invention have been described in detail in the foregoing, the description is merely an example of the present invention in all of its aspects. Various improvements and modifications can be made without departing from the scope of the present invention. In other words, a specific configuration according to an embodiment may be adopted as appropriate when implementing the present invention.

The present invention should not be limited to the above-described embodiments as-is, but may be embodied by modifying the components without departing from the scope of the invention at the implementation stage. In addition, various inventions may be constituted by appropriately combining a plurality of components disclosed in the embodiments. For example, some components may be omitted from the components shown in the embodiments. Furthermore, the components of different embodiments may be suitably combined.

### REFERENCE SIGNS LIST

1 ... information management system
10 ... data owner terminal
10A ... data owner A terminal
10B ... data owner B terminal
10C ... data owner C terminal
11 ... data owner dedicated storage area
11A ... data owner A dedicated storage area
11B ... data owner B dedicated storage area
11C ... data owner C dedicated storage area
12, 22, 51 ... individual area
20 ... logic owner terminal
20α ... logic owner α terminal
20β ... logic owner β terminal
20γ ... logic owner γ terminal
21 ... logic owner dedicated storage area
21α ... logic owner α dedicated storage area
21β ... logic owner β dedicated storage area
21γ ... logic owner γ dedicated storage area
22 ... individual area
30, 50 ... cloud storage
31 ... public area
311 ... logic group metadata shared storage area
312 ... data group shared storage area
40 ... information management device
41 ... secret storage area
42 ... controller
421 ... usage condition acquisition processing unit
422 ... metadata management processing unit
423 ... data and logic acquisition processing unit
424 ... calculation processing unit
425 ... result processing unit
426 ... data processing unit
43 ... program storage
44 ... data storage
441 ... usage condition storage
4411 ... logic owner condition storage unit
4411α ... logic owner α condition storage unit
4411β ... logic owner β condition storage unit
4412 ... logic usage condition
4413 ... data owner condition storage unit
4413A ... data owner A condition storage unit
4413B ... data owner B condition storage unit
4414 ... data file usage condition
442 ... user information storage
443 ... billing information storage
444 ... temporary storage
46 ... bus
60 ... user terminal
NW ... network

## Claims

1. An information management device configured to manage chargeable use by a second user for logic owned by a first user, the information management device comprising:
a communication interface configured to communicate with a first user terminal operated by the first user and a second user terminal operated by the second user; and
a controller configured to control the information management device,
the controller including:
a publication processing unit configured to create logic metadata describing contents of the logic based on setting information sent from the first user terminal and related to the contents of the logic and a use fee, and to publish the created logic metadata; and
an acquisition processing unit configured to acquire use logic and target data in response to designation of the use logic corresponding to the published logic metadata and the target data on which a calculation is performed using the use logic, the designation of the use logic and the target data being transmitted from the second user terminal, and to store the use logic and the target data in a secret area concealed from the first user and the second user;
a calculation processing unit configured to perform a calculation on the target data stored in the secret area by using the use logic stored in the secret area and to store a calculation result in the secret area;
a determination processing unit configured to determine an amount of charge that occurs between the first user and the second user related to use of the use logic based on the setting information;
a provision processing unit configured to provide the second user with the calculation result stored in the secret area and to provide the first user and the second user with a report of the determined amount of charge; and
a deletion processing unit configured to delete the use logic, the target data, and the calculation result stored in the secret area.

2. The information management device according to claim 1, wherein
at least one logic file owned by the first user is stored in a first user dedicated storage area accessible only by the first user,
at least one data file owned by the second user is stored in a second user dedicated storage area accessible only by the second user,
the acquisition processing unit, in response to the designation of the use logic and the target data, acquires a corresponding logic file as the use logic from the at least one logic file stored in the first user dedicated storage area and acquires a corresponding data file as the target data from the at least one data file stored in the second user dedicated storage area, and
the provision processing unit writes the calculation result in the second user dedicated storage area.

3. The information management device according to claim 2, wherein
the publication processing unit performs at least one of
creating and publishing data file metadata describing contents of the data file based on the setting information sent from the second user terminal and related to the contents of the data file and a use fee, and
creating and publishing processed data by processing the data file based on the setting information sent from the second user terminal and related to a processing method of the data file and the use fee,
in response to designation of the use logic and the target data from a third user terminal operated by a third user different from the first user and the second user, the acquisition processing unit acquires a corresponding logic file as the use logic from the at least one logic file stored in the first user dedicated storage area, and acquires a corresponding data file as the target data from the at least one data file stored in the second user dedicated storage area,
the determination processing unit determines, as the amount of charge, an amount of charge that occurs between the third user and each of the first user and the second user, related to the use of the use logic and the data file based on the setting information, and
the provision processing unit provides the first user, the second user, and the third user with the report of the amount of charge.

4. The information management device according to claim 1, wherein
at least one logic file owned by the first user is stored in a first user dedicated storage area accessible only by the first user,
in response to the designation of the use logic and the target data, the acquisition processing unit acquires a corresponding logic file as the use logic from the at least one logic file stored in the first user dedicated storage area, and acquires the target data from the second user terminal, and
the provision processing unit transmits the calculation result and the report of the amount of charge to the second user terminal.

5. The information management device according to any one of claims 1 to 4, further comprising
a settlement processing unit configured to perform settlement processing among users according to the determined amount of charge,
wherein the provision processing unit provides each of the users with a settlement report related to the settlement processing as the report of the amount of charge.

6. An information management system comprising:
the information management device according to any one of claims 2 to 4; and
a storage connected to the information management device via a network and including at least the first user dedicated storage area.

7. An information management device method for managing chargeable use by a second user for logic owned by a first user, the method comprising:
by a computer,
creating logic metadata describing contents of the logic based on setting information sent from a first user terminal operated by the first user and related to the contents of the logic and a use fee, and publishing the created logic metadata;
acquiring use logic and target data in response to designation of the use logic corresponding to the published logic metadata and the target data on which a calculation is performed using the use logic, the designation of the use logic and the target data being transmitted from a second user terminal operated by the second user, and storing the use logic and the target data in a secret area concealed from the first user and the second user;
performing a calculation on the target data stored in the secret area by using the use logic stored in the secret area and storing a calculation result in the secret area;
determining an amount of charge that occurs between the first user and the second user related to use of the use logic based on the setting information;
providing the second user with the calculation result stored in the secret area and providing the first user and the second user with a report of the determined amount of charge; and
deleting the use logic, the target data, and the calculation result stored in the secret area.

8. An information management program for causing a computer to perform processing of each of the processing units included in the information management device according to any one of claims 1 to 5.
